# EUROPÄISCHE PATENTSCHRIFT

(11) **EP 2 181 369 B1**
(45) Veröffentlichungstag und Bekanntmachung des Hinweises auf die Patenterteilung: **07.03.2012**
(21) Anmeldenummer: 08803095.2
(22) Anmeldetag: 19.08.2008
(51) Int. Cl.: G05B 19/042, G05B 19/05, G05B 19/414, G05B 19/418, H04L 12/407

(54) **STEUERKNOTEN UND STEUERUNG**
CONTROL NODE AND CONTROL
NOEUD DE COMMANDE ET COMMANDE

(30) Priorität: 21.08.2007 DE 102007039425
(43) Veröffentlichungstag der Anmeldung: 05.05.2010
(73) Patentinhaber: Beckhoff Automation GmbH, 33415 Verl (DE)
(72) Erfinder: PAPENFORT, Josef, 32609 Hüllhorst (DE); HEITMANN, Ralf, 33818 Leopoldshöhe (DE); HOPPE, Gerd, 33378 Rheda-Wiedenbrück (DE); CHRISTOW, Itzko, 33330 Gütersloh (DE)
(74) Vertreter: Patentanwaltskanzlei WILHELM & BECK
(86) Internationale Anmeldenummer: PCT/EP2008/060858
(87) Internationale Veröffentlichungsnummer: WO 2009/024577

(56) Entgegenhaltungen:
- WO-A-2004/055609
- DE-A1- 10 101 745
- US-A1- 2003 177 979
- US-A1- 2004 138 767

## Beschreibung

Die Erfindung betrifft einen Steuerknoten und eine Steuerung mit solchen Steuerknoten.

Moderne Konzepte für die Industrieautomation beruhen auf der Idee der dezentralen Steuerung. Die auszuführende Steuerungsaufgabe wird geographisch und funktionell optimal auf die Steuerungsknoten der dezentralen Steuerung aufgeteilt. Die Steuerungsknoten kommunizieren dabei untereinander und mit den übergeordneten Systemen über lokale Netzwerke. Durch die dezentrale Steuerung kann der Kommunikationsaufwand reduziert werden, da die einzelnen Steuerungsknoten auf ihre Bereiche bezogene Steuerungsaufgaben selbst übernehmen und nur zur Abstimmung mit den weiteren Steuerknoten bzw. mit den übergeordneten Systemen kommunizieren müssen.

Die dezentrale Steuerung beruht dabei auf der Grundidee, die Automatisierungsaufgabe in einzelne funktionelle und logisch abgeschlossene Module aufzuteilen, die dann prozessnah angeordnet werden können, wodurch sich der Verkabelungs- und Installationsaufwand reduzieren lässt. Durch die Aufteilung in Module kann die Komplexität vermindert werden, sodass sich Funktionen einfacher realisieren lassen.

Ein weiterer Trend in der Automatisierungstechnik sind offene Systeme, die es dem Anwender ermöglichen, Automatisierungskomponenten von verschiedenen Herstellern zu kombinieren. Hierdurch besteht für den Anwender die Möglichkeit, für einzelne Teilaufgaben jeweils die beste technische Lösung einzusetzen und sich auch den günstigsten Hersteller auszusuchen. Eine wesentliche Anforderung an die Automatisierungskomponenten in offenen Systemen ist die Verbindbarkeit, d.h. die einzelnen Automatisierungskomponenten müssen prinzipiell in der Lage sein, Daten miteinander auszutauschen. Weiterhin erfordern offene Systeme Interoperabilität der Automatisierungskomponenten, d.h. die einzelnen Automatisierungskomponenten müssen definierte Profile aufweisen, um eine Zusammenarbeit bei der Durchführung der Automatisierungsaufgabe zu gewährleisten. Schlussendlich ist bei offenen Systemen die Austauschbarkeit von Automatisierungskomponenten verschiedener Hersteller gefordert, d.h. die Geräte der Hersteller müssen den gleichen Funktionsumfang aufweisen.

Trotz der zunehmenden Verwendung dezentraler offener Steuerungen und den sich daraus ergebenden Kostenvorteilen besteht in der Industrieautomation weiter das Problem eines Returnof-Investment, vor allem wegen der sich immer weiter verkürzenden Produktlaufzeiten. Neue Produkte werden zwar bereits derart entwickelt, dass sie sich gut automatisch herstellen lassen. Die Automatisierungssysteme zur Fertigung der Produkte sind in der Regel jedoch ganz spezifisch auf das zu fertigende Produkt ausgelegt und lassen sich deshalb nur mit hohem Aufwand an Produkt- und Prozessveränderungen anpassen.

Stand der Technik ist aus der US 2004/138767 A1, der US 2003/177979 A1, der DE 101 01 745 A1 und der WO 2004/055609 A bekannt.

Aufgabe der Erfindung ist es, einen Steuerknoten in einem Netzwerk aus Steuerknoten und eine Steuerung bereitzustellen, bei der die Programmierung von Synchronisierungsbausteinen vereinfacht ist.

Diese Aufgabe wird erfindungsgemäß durch einen Steuerknoten gemäß Anspruch 1 und eine Steuerung gemäß Anspruch 6 gelöst. Bevorzugte Weiterbildungen sind in den abhängigen Ansprüchen angegeben.

Erfindungsgemäß weist der Steuerknoten eine Sequenztabelle und Teilnehmer auf, wobei die Sequenztabelle Datensätze mit jeweils einer Kennung für eine Aktion einer dem Steuerknoten zugeordneten Fertigungssequenz, einer Kennung für einen die Aktion ausführenden Teilnehmer und einer Kennung eines der Aktion zugeordneten Parametersatzes aufweist. Jeder Teilnehmer umfasst dabei einen Sequenzinterpreter, der ausgelegt ist, die Sequenzen der Tabelle zu lesen und zu interpretieren und die dem Teilnehmer zugeordnete Aktion anzustoßen. Erfindungsgemäß sind dabei die Steuerknoten zum Ausführen von Fertigungsprozessen in einer Steuerung über ein Datenkommunikationsnetz miteinander verbunden, wobei der Fertigungsprozess in von dem jeweiligen Steuerknoten auszuführende Fertigungssequenzen mit Aktionen unterteilt ist.

Die erfindungsgemäße Auslegung des Steuerknotens ermöglicht eine dezentrale Steuerung in Form eines offenen Systems mit einer hohen Kompatibilität und Flexibilität bezüglich der Funktion der einzelnen Steuerknoten. Der Fertigungsprozess kann flexibel in Teilsequenzen, die von den einzelnen Steuerknoten auszuführen sind, unterteilt werden, wobei die einzelnen Teilsequenzen ohne hohen Programmieraufwand durch Anpassung der Sequenztabelle direkt in den Steuerknoten festgelegt werden können. Die Steuerknoten sind dabei in Teilnehmer aufgeteilt, die jeweils autark handeln, indem sie die Sequenztabelle mit der auszuführenden Fertigungssequenz mithilfe des Sequenzinterpreters lesen, interpretieren und dann die dem Teilnehmer zugeordnete Aufgabe anstoßen. Es lässt sich noch während des Fertigungsprozesses eine Anpassung an Änderungen im Produktionsablauf durch entsprechende Umprogrammierung der Sequenztabellen ausführen, ohne dass der Fertigungsprozess abgebrochen und eine Neuprogrammierung der gesamten Anlage durchgeführt werden muss.

Erfindungsgemäß arbeitet der Sequenzinterpreter des Teilnehmers die Sequenztabelle auf der Grundlage der Signalisierungsdaten von weiteren Teilnehmern ab. Diese Vorgehensweise gewährleistet, dass die einzelnen Aktionen der Fertigungssequenz aufeinander abgestimmt ausgeführt werden.

Um eine effektive Synchronisierung über Steuerknotengrenzen hinaus durchzuführen, ist ein Synchronisierungsbaustein vorgesehen, der Synchronisierungsdaten für weitere Teilnehmer erzeugt. Der Synchronisierungsbaustein ist dabei wie ein Teilnehmer ausgelegt und erzeugt Signalisierungsdaten gemäß einer zugeordneten Aktion. Diese Auslegung sorgt dafür, dass die Synchronisierung zwischen den Steuerknoten auf einfache Weise an Änderungen im Produktions- und Fertigungsprozess angepasst werden kann. Zur Adaption der Synchronisierung ist nur eine Änderung der dem Synchronisierungsbaustein zugeordneten Aktion erforderlich.

Die Signalisierungsdaten vom Synchronisierungsbaustein werden durch eine logische Verknüpfung von angelegten Synchronisierungsdaten erzeugt, wobei die logische Verknüpfung durch die zugeordnete Aktion vorgegeben wird. Die Vorgehensweise ermöglicht es, getriggerte Signalisierungsdaten zu erzeugen, um eine korrekte Ausführung der Fertigungssequenz zu gewährleisten.

Gemäß einer weiteren bevorzugten Ausführungsform weist der einer Aktion zugeordnete Parametersatz selbst ein Produktstatus-Ausgangsdatum zum Vergleichen mit einem Produkt-Zustandswert vor dem Ausführen der Aktion, einem Produktstatus-Enddatum zur Wiedergabe des Produkt-Zustandswertes, wenn die Aktion erfolgreich abgelaufen ist, und Aktionsparameter, die die Funktionalität der Aktion festlegen, auf. Diese Auslegung der Parametersätze in der Sequenztabelle sorgt für eine einfache Aufteilung des Fertigungsprozesses auf die einzelnen Funktionalitäten des Steuerknotens. Die einzelnen Aktionen sind dabei durch Festlegung des Ausgangs- und Endzustands des Produktes und der dazwischen liegenden Funktionsparameter eindeutig definiert.

Bevorzugt ist dabei weiterhin, ein Zeitüberschreitungsdatum in den Parametersatz zu integrieren, um einem Blockieren des Fertigungsprozesses bzw. anderer Teilnehmer durch einen Fehler bei der Ausführung der Aktion zu verhindern und um auf einfache Weise eine Kontrolle der Aktion durchführen zu können.

Weiterhin ist es bevorzugt, dass der Teilnehmer einen Zustandswert für ein im Rahmen der Aktion zu bearbeitendes Produkt als ein Signalisierungsdatum erhält und nach erfolgreichen Abschluss der Aktion dann als ein Signalisierungsdatum einen Zustandswert für das im Rahmen der Aktion bearbeitete Produkt verschickt. Mit dieser Vorgehensweise lässt sich der Fertigungsprozess auf einfache Weise modularisieren. Der Austausch der Produktzustände als Signalisierungsdaten ermöglicht eine Standardisierung der Datenkommunikation zwischen den Teilnehmern und damit einen schnellen Datenzugriff.

Gemäß einer weiteren bevorzugten Ausführungsform weist der Steuerknoten einen Speicher für die Sequenztabelle auf, wobei die Parameter jeweils beim Anstoßen der Aktion vom Teilnehmer abgeholt werden. Dies ermöglicht es auf einfache Weise, zentral im Steuerknoten die Fertigungssequenz festzulegen und gegebenenfalls Anpassungen durchzuführen.

Gemäß einer weiteren bevorzugten Ausführungsform weist der Steuerknoten zum Austausch von Daten mit weiteren Steuerknoten im Datenkommunikationsnetzwerk in Form von Datenpaketen ein Sende-Modul auf, das ausgelegt ist, die zu verschickenden Daten in einem Ausgangsprozessabbild zu verwalten, das Ausgangsprozessabbild in ein Datenpaket umzuwandeln und das Datenpaket zu einem vorgegebenen Zeitpunkt auf das Datenkommunikationsnetz auszugeben. Weiterhin weist der Steuerknoten ein Empfangs-Modul auf, das ausgelegt ist, sich für die Datenpakete eines oder mehrerer Sende-Module von mehreren Steuerknoten anzumelden und ein empfangenes Datenpaket in ein Eingangsprozessabbild umzusetzen. Mit dieser Ausgestaltung lässt sich auf einfache Weise die Datenkommunikation zwischen den Steuerknoten flexibel an Produktions- und Prozessabläufe anpassen. Die Möglichkeit, dass sich ein Steuerknoten mit Hilfe eines Empfangs-Moduls auf die Datenpakete mehrerer Steuerknoten anmelden kann, sorgt für eine flexible Ausgestaltung der Kommunikationsbeziehungen.

Gemäß einer bevorzugten Ausführungsform kann das Sende-Modul das Datenpaket an einen oder mehrere Steuerknoten direkt adressieren, wobei vorzugsweise Nicht-Echtzeitdaten azyklisch versandt werden. Alternativ kann das Sende-Modul das Datenpaket jedoch auch an alle am Netzwerk vorhandenen Steuerknoten weiterleiten, um dabei vorzugsweise Echtzeitdaten zyklisch zu übertragen. Mit dieser Auslegung lässt sich eine parallele Datenübertragung von Echtzeitdaten und Nicht-Echtzeitdaten durchführen. Die Kommunikation zwischen den Steuerknoten kann so optimal an die Produktions- und Fertigungsbedingungen angepasst werden.

Gemäß einer weiteren bevorzugten Ausführungsform wird die Datenübertragung zwischen den Teilnehmern im Steuerknoten in Form von Datenabbildungsvorgängen ausgeführt, wobei jeder Teilnehmer im Steuerknoten ausgelegt ist, direkt auf das zwischen den Teilnehmern übertragene Steuerknotenprozessabbild zuzugreifen. Dieser direkte Zugriff bei interner Datenübertragung im Steuerknoten ermöglicht einen sehr schnellen Datenaustausch mit geringem Protokollaufwand.

Gemäß einer weiteren bevorzugten Ausführungsform ist ein Teilnehmer im Steuerknoten als Master-Teilnehmer und ein weiterer Teilnehmer in demselben oder einem anderen Steuerknoten als Slave-Teilnehmer konfiguriert, wobei in der Master-Slave-Kopplung der Master-Teilnehmer den Slave-Teilnehmer als Funktionsobjekt nutzt. Die Möglichkeit einer Master-Slave-Kopplung ermöglicht eine hierarchische Teilnehmerstrukturierung, um die Funktionalitäten der einzelnen Teilnehmer optimal für den Fertigungsprozess einzusetzen. Nach außen stellt die Master-Slave-Kopplung einen einheitlichen Funktionsblock dar, so dass allein eine Umprogrammierung des Master-Teilnehmer zur Anpassung an Fertigungsprozessänderungen erforderlich ist.

Bevorzugt ist dabei weiterhin, dass der Master-Teilnehmer ein Stellvertreterobjekt und der Slave-Teilnehmer einen Anknüpfungspunkt aufweist, wobei das Stellvertreterobjekt Eingangsvariablen für das Funktionsobjekt in ein Datentelegramm umwandelt und an den Anknüpfungspunkt sendet und der Anknüpfungspunkt Ausgangsvariablen des Funktionsobjektes in ein Datenpaket umwandelt und an das Stellvertreterobjekt sendet. Diese Vorgehensweise ermöglicht eine einfache Datenkommunikation in der Master-Slave-Kopplung, weil die Daten transparent zwischen Master-Teilnehmer und Slave-Teilnehmer getunnelt werden können.

Die Master-Slave-Kopplung kann dabei alternativ von einen Netzwerkkonfigurator vorgegeben oder auch durch den Master-Teilnehmer selbst hergestellt werden. Diese Vorgehensweisen ermöglichen es flexibel sowohl in der Initialisierungsphase als auch während des Maschinenlaufs durch Aufbau und Abbau von Master-Slave-Kopplungen flexibel auf Änderungen im Produktions- und Fertigungsprozess zu reagieren.

Die Erfindung wird anhand der beigefügten Zeichnungen näher erläutert. Es zeigen:
Fig.1 schematisch ein Netzwerk mit Steuerknoten und Netzwerkkonfigurator;
Fig.2 eine Initialisierungsphase in einem erfindungsgemäßen Netzwerk;
Fig.3 eine Steuerknotenarchitektur;
Fig.4 einen Fertigungsprozess mit einem Transportband und einer Klebeeinheit mit Greifer als zwei Steuerknoten, wobei Fig. 4A die Gesamtsequenz, Fig. 4B eine Sequenztabelle für das Transportband, Fig. 4C Parametersätze des Transportbandes und Fig. 4D eine Sequenztabelle für die Klebeeinheit mit Greifer zeigen;
Fig. 5 einen Datenaustausch zwischen zwei Steuerknoten mit Synchronisierungsbausteinen als Teilnehmer;
Fig. 6 einen Synchronisierungsbaustein, wobei Fig. 6A den Aufbau des Synchronisierungsbausteins und Fig.6B Parametersätze des Synchronisierungsbausteins zeigen; und
Fig.7 einen Datenaustausch zwischen vier Steuerknoten gemäß einem Master-Slave-Teilnehmerkonzept.

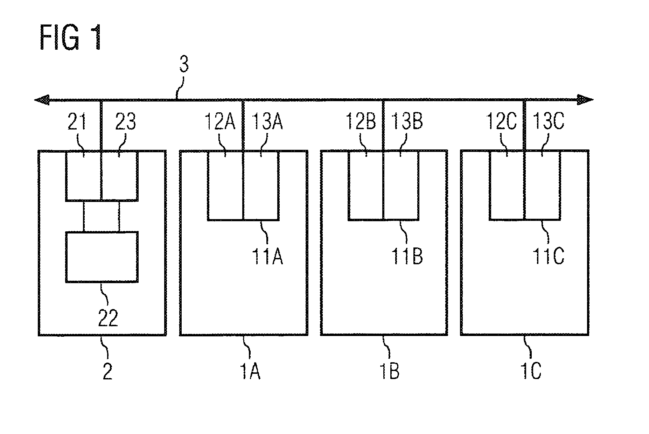

In der Industrieautomation, d.h. der Steuerung und Überwachung von technischen Prozessen mit Hilfe von Software, werden zunehmend dezentrale Steuerungen eingesetzt. Bei der dezentralen Steuerung wird die Steuerungsaufgabe auf Steuerknoten verteilt. Die Steuerknoten kommunizieren dabei untereinander und, wenn erforderlich, mit übergeordneten Systemen über ein industrielles lokales Netzwerk. Fig.1 zeigt eine solche dezentrale Steuerung mit drei Steuerknoten 1A, 1B, 1C und einem Netzwerkkonfigurator 2 zur Konfiguration und Überwachung des Netzwerkes. Die Steuerknoten 1 und der Netzwerkkonfigurator 2 bilden dabei ein lokales Kommunikationsnetz, ein sog. Local Area Network (LAN). LANs sind lokale Kommunikationsnetzwerke, die auf ein geographisches Gebiet begrenzt sind und sich aus einem oder mehreren Servern oder Arbeitsstationen, den Steuerknoten, zusammensetzen, die über eine Kommunikationsleitung 3, z.B. Twisted-Pair-Kabel oder ein Glasfaserkabel miteinander verbunden sind. Bei den LANs sind verschiedene Netzwerkausgestaltungen möglich, wobei die bekanntesten die Bus-, Ring-, Stern- und Baumstruktur sind. Fig. 1 zeigt die Ausbildung des LANs mit einer Busstruktur.

Wesentliche Anforderung an das LAN beim Einsatz in der Industrieautomation als sog. Feldbussystem ist die Echtzeitfähigkeit. Das Feldbussystem muss gewährleisten, dass jedes gesendete Datenpaket innerhalb einer begrenzten garantierten Zeit beim Empfänger ankommt. LANs werden mit einem Netzwerkbetriebssystem und einem einheitlichen Netzwerkprotokoll betrieben. Bevorzugter Kommunikationsstandard ist dabei das Ethernet-Konzept. Das Ethernet-Konzept bietet nämlich die Möglichkeit der Nutzung von Standard-Hardware- und Software-Komponenten. Weiterhin zeichnet sich das Ethernet-Konzept durch eine einfache Vernetzungstechnologie bei gleichzeitig hoher Datenübertragungsrate aus.

Im OSI-Schichtmodell, dem internationalen Referenzmodell für Datenübertragung in Netzwerken, das auf einem Schichtenstapel mit sieben Schichten aufgebaut ist, wobei jede Schicht eine Menge von Protokollen definiert, die jeweils der nächst höheren Schicht ihre Dienste zur Verfügung stellt, ist das Internetprotokoll der 2. Schicht, der sog. Leitungsschicht zugeordnet. In dieser Leitungsschicht werden zu übermittelnde Daten zu Paketen gebündelt, denen spezifische Informationen für das jeweilige Kommunikationsprotokoll hinzugefügt werden. Die Leitungsschicht ist im Netzwerk für den Transport der Datenpakete von Steuerknoten zu Steuerknoten und für die Fehlererkennung zuständig. Im Ethernet-Konzept ist die Leitungsschicht in zwei Ebenen unterteilt, wobei die erste Ebene den Daten einen ersten Kopfabschnitt hinzufügt, der Informationen enthält, die für eine korrekte Datenübertragung vom Empfängerprotokoll benötigt werden. In der 2. Ebene wird dann das zu versendende Datenpaket mit einem weiteren Kopfabschnitt und einem Endabschnitt für den Transport der Datenpakete von Steuerknoten zu Steuerknoten eingekapselt. Mit solchen Ethernetpaketen, auch als Ethernet-Telegramme bezeichnet, lassen sich Daten mit einer Länge bis zu 1500 Bytes übertragen.

Um das Ethernet-Konzept auch in der Industrieautomation nutzen zu können, bei der Echtzeitfähigkeit gefordert ist, weist jeder Steuerknoten 1 eine für den Echtzeitbetrieb erweiterte Netzwerkanschaltung 11 auf. Die Netzwerkanschaltung 11 kann dabei sowohl hardware- als auch softwaretechnisch im Steuerknoten realisiert sein. Die Netzwerkanschaltung 11 im Steuerknoten 1 ermöglicht die parallele Nutzung des Bussystems 3 zur Ermittlung von Daten für Echtzeitanwendungen und für Nicht-Echtzeitanwendungen. Die Daten für Echtzeitanwendungen werden dabei von der Netzwerkanschaltung 11 priorisiert behandelt, sodass zuerst Echtzeitdaten übertragen werden und in der verbleibenden Zeit bis zur Übertragung der nächsten Echtzeitanwendungen dann die Daten für Nicht-Echtzeitanwendungen.

Für die Datenübertragung über das Bussystem 3 ist die Netzwerkanschaltung 11 der Steuerknoten 1 in ein Sende-Modul 12 und ein Empfangs-Modul 13 unterteilt. Das Sende-Modul 12 verwaltet die zu verschickenden Daten in einem Ausgangsprozessabbild. Die Datenpakete werden z.B. in Form von Ethernet-Telegrammen verschickt. Das Sende-Modul 12 des Sender-Steuerknotens 1 setzt das Ausgangsprozessabbild gemäß dem Netzwerkprotokoll in ein Datenpaket um und gibt das Datenpaket dann zu einem vorgegebenen Zeitpunkt auf das Netzwerk aus. Das Empfangs-Modul 13 des Empfänger-Steuerknotens 1 - das Empfangs-Modul 13 kann für den Empfang von Datenpaketen, die von einem oder mehrerer Sende-Module 12 von weiteren Steuerknoten 1 ausgegeben werden, angemeldet sein- setzt dann das empfangene Datenpaket in ein Eingangsprozessabbild um, das dann vom Steuerknoten 1 weiterverarbeitet werden kann.

Mit dieser Auslegung ist es möglich, die Kommunikationsbeziehungen zwischen den Steuerknoten im Netzwerk flexibel und auch während der Anlagenlaufzeit, d.h. dynamisch festzulegen und somit auf eine einfache Weise eine dezentrale Steuerung mit hoher Kompatibilität bezüglich der eingesetzten Apparate und Geräte zu erreichen. Änderungen im Produktions- und Fertigungsprozess, z.B. Produktionserweiterung oder Produktionswechsel lassen sich einfach durch Änderung der Kommunikationsbeziehungen, d.h. Neu-Festlegen der Sende-Empfangs-Modul-Relationen, die angeben, welcher Steuerknoten zu welchen weiteren Steuerknoten Daten übertragen müssen, ausführen.

Die Festlegung der Kommunikationsbeziehungen der Sende- und Empfangs-Module erfolgt vorzugsweise im Rahmen einer Initialisierungsphase mit Hilfe des Netzwerkkonfigurators 2. Der Netzwerkkonfigurator 2 weist dazu ein Erfassungsmodul 21 auf um die an das Netzwerk angeschlossenen Steuerknoten zu ermitteln. Das Erfassungsmodul 21 ist im Netzwerkkonfigurator 2 mit einem Konfigurationsmodul 22 verbunden, das die Kommunikationsbeziehungen der Sende- und Empfangs-Module 12, 13 der ermittelnden Steuerknoten 1 festlegt, d.h. welcher Steuerknoten sich mit seinem Empfangs-Modul bei welchem anderen Steuerknoten zum Empfang von Daten von dessen Sende-Modul anmelden soll. Das Konfigurationsmodul 22 ist wiederum mit einem Programmiermodul 23 verbunden, das die durch das Konfigurationsmodul festgelegten Kommunikationsbeziehungen zwischen den Steuerknoten im Netzwerk dann auf diese Steuerknoten überträgt.

Der Netzwerkkonfigurator 2 kann jedoch die Kommunikationsbeziehung zwischen den Steuerknoten bzw. den Teilnehmern im Steuerknoten auch nach der Initialisierungsphase dynamisch anpassen. Mit dieser Ausgestaltung kann auf einfach Weise auf Produktionserweiterung und Produktionswechsel reagiert werden. Der Netzwerkkonfigurator 2 ermöglicht es dann, durch einfache Umprogrammierung entsprechende Anpassungen der Kommunikationsbeziehungen zwischen den einzelnen Steuerknoten bzw. den Teilnehmern im Steuerknoten vorzunehmen.

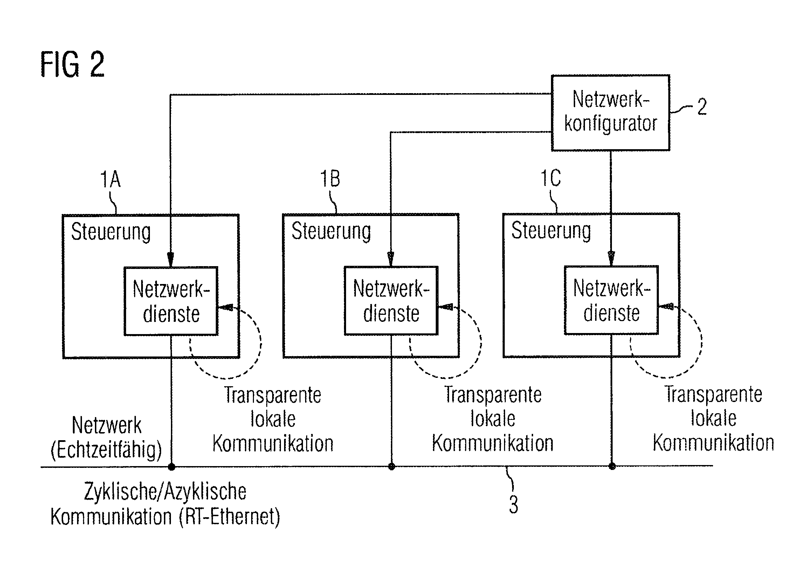

Die Initialisierungsphase der in Fig. 1 dargestellten dezentralen Steuerung ist in Fig. 2 im Detail gezeigt. Die Pfeile in der Figur zeigen dabei den durchgeführten Datenaustausch an. In einem ersten Schritt der Initialisierungsphase erfasst der Netzwerkkonfigurator 2 die am Netzwerk angeschlossenen Steuerknoten 1. Die Steuerknoten weisen hierzu eine eindeutige dem jeweiligen Steuerknoten zugeordnete Adresse auf, über die der Steuerknoten angesprochen werden kann. Der Steuerknoten kann diese Adresse z.B. beim Hochfahren am Bussystem über das Dynamic Configuration Protocol (DHCP) oder über Automatic IP beziehen. Die Adresse kann jedoch auch im Steuerknoten bereits voreingespeichert sein.

Zur automatischen Erkennung der Steuerknoten 1 kann der Netzwerkkonfigurator 2 verschiedene Mechanismen verwenden. Das Erfassungsmodul des Netzwerkkonfigurators 2 kann ein sog. Broadcast-Telegramm an alle Steuerknoten 1, die an das Netzwerk 3 angeschlossen sind, senden. Die Steuerknoten 1 antworten dann auf dieses Broadcast-Telegramm mit einem Antworttelegramm und geben dabei ihre gültige Adresse bekannt. Alternativ besteht auch die Möglichkeit, dass jeder Steuerknoten beim Hochfahren automatisch ein Identifizierungstelegramm mit seiner Adresse an das Erfassungsmodul des Netzwerkkonfigurators 2 sendet.

Parallel zur Adressenerfassung kann das Erfassungsmodul 21 des Netzwerkkonfigurators 2 auch eine Gerätebeschreibung, die die Netzwerkeigenschaften und die Funktion des Steuerknoten charakterisiert, vom Steuerknoten abfragen, bzw. der Steuerknoten kann beim Hochfahren die Gerätebeschreibung automatisch an das Erfassungsmodul des Netzwerkkonfigurators übermitteln.

Auf der Grundlage der Anzahl der erfassten Steuerknoten sowie deren Geräteeigenschaften legt dann das Konfigurationsmodul 22 des Netzwerkkonfigurators 2 die Kommunikationsbeziehungen zwischen den Steuerknoten am Netzwerk fest, d.h. welcher Steuerknoten sich mit seinem Empfangs-Modul bei welchem anderen Steuerknoten zum Empfang von Daten von dessen Sende-Modul anmelden soll. Das Konfigurationsmodul 22 enthält dafür vorzugsweise ein Anlagenobjektmodell, das eine standardisierte Anlagendarstellung und Prozessbeschreibung enthält, die mit den Geräteeigenschaften der ermittelten Steuerknoten kombiniert werden, um die Kommunikationsbeziehungen zu definieren. Alternativ zu einer Eingabe der Gerätebeschreibung über die Steuerknoten kann die Gerätebeschreibung auch über eine externe Datenbank eingelesen werden oder auch direkt über eine Mensch-Maschine-Schnittstelle in den Netzwerkkonfigurator 2 eingegeben werden. Die Anlagendarstellung und die Prozessbeschreibung kann der Netzwerkkonfigurator z.B. von einem Engineering-System erhalten.

Die vom Netzwerkkonfigurator 2 festgelegten Kommunikationsbeziehungen zwischen den Steuerknoten 1 geben jeweils das Sende-Modul, das die Daten versendet, und das Empfangs-Modul, das die Daten empfängt, sowie die Datenübertragungsart und den Datentyp an. Die Datensätze mit den Kommunikationsbeziehungen werden vom Programmiermodul 23 des Netzwerkkonfigurators 2 über das Bussystem 3 in die Steuerknoten 1 eingeschrieben. Nach Abschluss des Initialisierungsvorgangs wird die dezentrale Steuerung dann in den Maschinenbetrieb umgeschaltet, um den gewünschten Produktions- und Fertigungsprozess auszuführen. In diesem Betriebsmodus wird der Netzwerkkonfigurator 2 nicht mehr benötigt. Der Netzwerkkonfigurator 2 kann dann entweder abgeschaltet werden oder eine beobachtende Funktion beim Produktions- und Fertigungsprozess einnehmen, also z.B. eine Fehlerüberwachung und -Diagnose durchführen.

Die Steuerknoten tauschen während des Produktions- und Fertigungsprozesses gemäß der vom Netzwerkkonfigurator vorgegebenen Kommunikationsbeziehungen Daten aus. Das Sende-Modul des Sender-Steuerknotens kann dabei Daten in einer Punkt zu Punkt-Verbindung direkt an das Empfangs-Moduls des Empfänger-Steuerknotens schicken. Alternativ kann das Sende-Modul des Sender-Steuerknotens die Daten jedoch auch an die Empfangs-Module mehrerer Empfänger-Steuerknoten senden. Ferner besteht die Möglichkeit eines Versandes der Daten durch das Sende-Modul des Sender-Steuerknotens an die Empfangs-Module aller an das Netzwerk angeschlossenen Steuerknoten. Nicht-Echtzeitdaten werden dabei in der Regel azyklisch über Punkt zu Punkt-Verbindungen ausgetauscht. Solche Nicht-Echtzeitdaten sind Ereignisdaten oder Parameterdaten zur Charakterisierung des Produktes und des Prozessablaufes. Daten, insbesondere Prozessdaten dagegen, die zur Ausführung von Echtzeitanwendungen erforderlich sind, werden zyklisch an alle Steuerknoten versandt. Bei Echtzeitdaten können Punkt zu Mehrpunkt-Übertragung bzw. eine Broadcast-Übertragung ausgeführt werden.

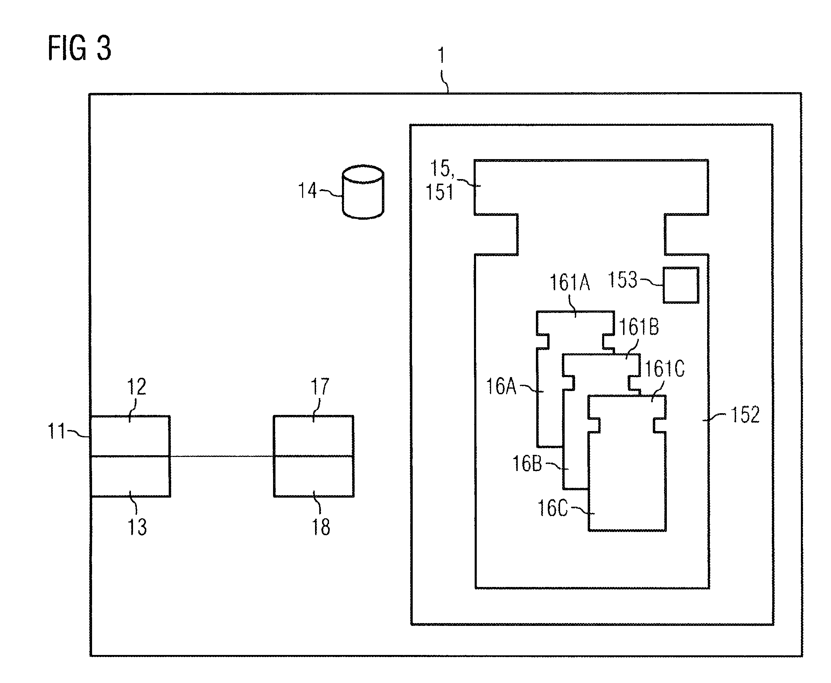

Fig.3 zeigt schematisch den möglichen Aufbau eines Steuerknotens. Jeder Steuerknoten weist neben der Netzwerkeinschaltung 11, die das Sende-Modul 12 und das Empfangs-Modul 13 enthält, eine Gerätebeschreibung auf, die die Funktions- und Kommunikationseigenschaften des Steuerknotens darstellt. Die Form dieser Gerätebeschreibung ist vorzugsweise für alle Steuerknoten standardisiert und als Datei in einem Speicherbereich 14 des Steuerknotens abgelegt. Die Gerätebeschreibung kann von übergeordneten Systemen oder auch vom Netzwerkkonfigurator abgerufen werden. Die Gerätebeschreibung kann auch von extern, also wiederum durch den Netzwerkkonfigurator bzw. ein übergeordnetes System oder auch über eine Mensch-Maschinen-Schnittstelle verändert werden, um die Funktions- und Kommunikationseigenschaften des Steuerknotens an den aktuellen Status anzupassen.

Der Gerätebeschreibung des Steuerknotens, die die Hardware des Steuerknotens und seine Funktionen bzw. die Schnittstellen zur Außenwelt darstellt, ist im Steuerknoten ein Maschinenmodell 15 zugeordnet. Das Maschinenmodell 15 bildet die Geräteigenschaften in Form von Funktionalitäten nach und entkoppelt somit die Gerätefunktionalitäten von der realen Hardwaresteuerung. Mit Hilfe des Maschinenmodells lässt sich die Anlage bzw. innerhalb der Steuerknoten liegende Funktionalitäten auf einfache und effektive Weise modularisieren und damit eine dezentrale Steuerung aufbauen. Das Maschinenmodell kapselt die Gerätefunktionalität und stellt somit autarke Moduleinheiten bereit, die für alle Geräte-, Kommunikations- und Funktionseinheiten jeweils einem einheitlichen abstrahierten Betriebsablauf folgend für sich selbst, also ohne Leitsystem betrieben werden können.

Zur Verarbeitung der Ereignis-, Parameter- und Prozessdatenströme erhalten die Steuerknoten jeweils ein Ereigniserfassungsmodul 17 und ein Datenerfassungsmodul 18, die, wie Fig. 3 zeigt, mit der Netzwerkanschaltung 11, die Sende-Modul 12 und Empfangs-Modul 13 enthält, verbunden sind. Ereignisse, d.h. Hinweise, Meldungen, Fehler im laufenden Maschinenbetrieb, etc. werden von dem Ereigniserfassungsmodul 17 klassifiziert und zwischengespeichert. Weitere, insbesondere übergeordnete Steuerknoten haben die Möglichkeit, diese zwischengespeicherten Ereignisse abzurufen. Die Ereignisse werden dabei in quittierpflichtige und nichtquittierpflichtige Ereignisse unterteilt. Quittierpflichtige Ereignisse müssen von einer autorisierten Stelle quittiert werden, bevor sie aus dem Ereigniserfassungsmodul 17 entfernt werden können. Das Datenerfassungsmodul 18 speichert die Parameter- und Prozessdaten und ermöglicht es weiteren, insbesondere übergeordneten Steuerknoten und auch dem Netzwerkkonfigurator, diese Parameter- und Prozessdaten abzuholen.

Das Maschinenmodell 15 ist in eine Organisationseinheit 151 und eine Funktionseinheit 152 unterteilt. Die Organisationseinheit 151 legt den Zustand des Steuerknotens fest. Der Zustand des Steuerknotens gibt die Betriebsart an, d.h., ob die Maschine manuell, halbautomatisch oder automatisch betrieben wird, ob die Maschine sich im Initialisierungsmodus oder im Maschinenbetriebsmodus befindet. Ferner ist in der Organisationseinheit 151 der Betriebszustand des Steuerknotens definiert. Betriebszustände können z.B. Anfahren, Stopp oder auch Fehlerbetrieb sein. Die Betriebszustände werden durch die Organisationseinheit 151 des Maschinenmodells 15 im Steuerknoten 1 eindeutig festgelegt und abgearbeitet. Weiterhin sorgt die Organisationseinheit 151 des Maschinenmodells 15 im Steuerknoten 1 dafür, dass die Übergänge zwischen den Betriebszuständen eindeutig sind. Die Organisationseinheit 151 stellt somit eine Zustandsmaschine da, die dafür sorgt, dass der gewünschte Zustand vom Steuerknoten auch ohne Zuhilfenahme äußerer Ereignisse erreicht wird.

In der Funktionseinheit 152 des Maschinenmodells 15 im Steuerknoten 1 sind die den jeweiligen Betriebszuständen zugeordnete Anwendungsprogramme, insbesondere Fertigungssequenzen, enthalten, die je nach dem von der Organisationseinheit eingestellten Betriebszustand dann von der Funktionseinheit 152 angestoßen werden. Die Anwendungsprogramme in den Funktionseinheiten der Steuerknoten bzw. den Funktionseinheiten der Teilnehmer in den Steuerknoten werden über individuelle Kennungen aufgerufen. Die Organisationseinheit 151 enthält dabei die Kennung und die Funktionsparameter der aufzurufenden Funktionseinheit 152 und führt den Aufruf aus. Eine Funktionseinheit stellt dabei eine elementare Funktion bereit, die von außen parametrisiert werden kann. Die Gesamtfunktionalität ergibt sich dann aus der Anordnung der Elementarfunktionen. Diese Elementarfunktionen können aus untergeordneten Elementarfunktionen zusammengesetzt werden und wiederum eine elementare Super-Funktion bilden.

Die Steuerknoten sind in Teilnehmer 16A, 16B, 16C unterteilt, die einzeln für sich ansprechbare Funktionalitäten des Steuerknotens definieren. Die Unterteilung der Steuerknoten in Teilnehmer ist frei konfigurierbar und unabhängig von der realen Hardware-Steuerung. Mit der Unterteilung der Steuerknoten in Teilnehmer lässt sich die Geschwindigkeit der Datenkommunikation optimieren. Bei einer Datenübertragung zwischen den Steuerknoten erfolgt die Datenübertragung gemäß dem Netzwerkprotokoll, also insbesondere dem Ethernet-Protokoll, wobei der sendende Steuerknoten mit seinem Sende-Modul das zu versendende Ausgangsprozessabbild in ein Netzwerkdatenpaket, also z.B. ein Ethernet-Telegramm, umsetzt und dann das Datenpaket zu einem vorgegebenen Zeitpunkt auf das Netzwerk ausgibt. Die Steuerknoten, die mit ihren Empfangs-Modulen auf dieses Sende-Modul angemeldet sind, setzen dann das empfangene Datenpaket wieder in ein Eingangsprozessabbild um. Wenn die Datenkommunikation dagegen intern in den Steuerknoten zwischen den Teilnehmern im Steuerknoten ausgeführt werden soll, erfolgt der Datenaustausch bevorzugt transparent durch Datenabbildungsvorgänge mit einem direkten Datenzugriff der Teilnehmer auf das zwischen den Teilnehmern zu übertragende Steuerknoten-Prozessabbild. Diese direkten Datenabbildungsvorgänge der Teilnehmer im Steuerknoten sorgen für einen schnellen Datenaustausch ohne aufwendige Umsetzvorgänge bzw. Transfervorgänge über die Sende- bzw. Empfangs-Module.

Die Datenübertragungsvorgänge, d.h. die direkte Datenabbildung zwischen den Teilnehmern und die Netzwerk-Protokollumsetzungen zwischen den Steuerknoten werden vorzugsweise durch den Netzwerkkonfigurator im Rahmen des vorher dargestellten Initialisierungsvorgangs vorgegeben. Die Kommunikationsbeziehungen zwischen den Teilnehmern im Steuerknoten werden dabei analog zu den Kommunikationsbeziehungen zwischen den Steuerknoten in Ereignis-, Parameter- und Prozessdatenströme unterteilt. Gleichzeitig wird auch die Art der Datenübertragung zwischen den Teilnehmern, d.h. ob die Datenübertragung zyklisch oder azyklisch durchgeführt werden soll, festgelegt.

Die Aufteilung der Steuerknoten in Teilnehmer mit einzelnen für sich ansprechbaren Funktionalitäten, die frei konfigurierbar sind, ermöglicht eine optimale Aufteilung eines gewünschten Fertigungsprozesses. Die Gesamtsequenz des Fertigungsprozesses wird dabei in Teil-Fertigungssequenzen aufgeteilt, die auf die verschiedenen Steuerknoten verteilt sind. Die Funktionseinheit 152 des Maschinenmodells 15 weist eine Sequenztabelle 153 auf, die die dem Steuerknoten 1 zugeordnete Fertigungssequenz innerhalb der Gesamtfrequenz des Fertigungsprozesses festlegt. Die Sequenztabelle 153 umfasst eine Kennung für eine Aktion innerhalb der Fertigungssequenz, eine Kennung für einen der Aktion zugeordneten Teilnehmer 16 innerhalb des Steuerknotens, der mit seiner gekapselten Funktionalität diese Aktion ausführen kann, sowie eine Kennung für das Ausführen der Aktion notwendigen Parametersatzes auf. Jeder Teilnehmer 16A, 16B, 16C wiederum umfasst einen Sequenzinterpreter 161A, 161B, 161C, der in der Lage ist, die Sequenztabelle 153 zu lesen, zu interpretieren und die dem Teilnehmer zugeordnete Aktion anzustoßen.

Die Sequenzinterpreter 161 der Teilnehmer 16 werden mit Hilfe von Signalisierungsdaten gesteuert, auf deren Grundlage der Sequenzinterpreter 161 die Sequenztabelle 153 abarbeitet. Die Signalisierungsdaten enthalten dabei insbesondere ein Triggersignal, das den Signalinterpreter im Teilnehmer veranlasst, die gemäß Sequenztabelle dem Teilnehmer zugeordnete Aktion auszuführen. Die für den jeweiligen Teilnehmer erforderlichen Signalisierungsdaten werden vorzugsweise durch die Sequenztabelle 153 selbst vorgegeben. Es besteht dabei die Möglichkeit, festzulegen, dass der Teilnehmer zum Abarbeiten der Sequenztabelle ein einzelnes Triggersignal oder auch mehrere Triggersignale benötigt. Diese Triggersignale können wiederum durch andere Teilnehmer erzeugt werden. Dies geschieht insbesondere dann, wenn bereits ausgeführte Aktionen dieser Teilnehmer Voraussetzung für das Ausführen der Aktion des Teilnehmers sind.

Ist jedoch zum Ausführen einer Aktion in einem Teilnehmer eines Steuerknotens eine Aktion in einem Teilnehmer eines anderen Steuerknotens erforderlich, erfolgt die Signalisierungsdatenerzeugung für den Teilnehmer mit Hilfe eines Synchronisationsbausteins. Der Synchronisationsbaustein stellt eine Funktionalität des Steuerknotens dar und wird als Teilnehmer 16 behandelt, der einen Sequenzinterpreter 161 aufweist. Der Sequenzinterpreter des Synchronisationsbaustein liest und interpretiert die am Empfangs-Modul 12 des Steuerknotens 1 angelegten Signalisierungsdaten, die wiederum von einem Sende-Modul eines weiteren Steuerknotens übertragen wurden, gemäß der Sequenztabelle 153 des Steuerknotens 1. Die dem Synchronisierungsbaustein in der Sequenztabelle zugeordneten Datensätze geben dabei vorzugsweise eine boolesche Verknüpfung z.B. AND, OR, NAND, NOR oder XOR für die angelegten Signalisierungsdaten vor, um ein Triggersignaldatum für einen oder mehrere Teilnehmer im Steuerknoten zu erzeugen. Die Teilnehmer arbeiten dann auf der Grundlage dieses Signalisierungsdatums die Sequenztabelle des Steuerknotens weiter ab.

Die vom Sende-Modul des Sende-Steuerknotens auf das Empfangs-Modul des Empfangs-Steuerknoten übertragenen Signalisierungsdaten, die zum Triggern der Teilnehmer in dem Empfangs-Steuerknoten dienen, werden wiederum vorzugsweise durch einen Synchronisierungsbaustein des Sende-Steuerknotens erzeugt, der als eigenständiger Teilnehmer ausgebildet ist. Dieser Synchronisierungsbaustein des Sende-Steuerknotens erzeugt mit seinem Sequenzinterpreter durch Abarbeiten der Sequenztabelle des Sende-Steuerknotens die Signalisierungsdaten und übergibt sie dem Sende-Modul zur Weiterleitung an das Empfangs-Modul des Empfangs-Steuerknoten. Jeder Steuerknoten umfasst als Teilnehmer damit vorzugsweise zwei Synchronisierungsbausteine zur Erzeugung einer internen Signalisierung für die Teilnehmer im Steuerknoten bzw. zur Erzeugung einer externen Signalisierung für Teilnehmer in anderen Steuerknoten. Diese beiden Funktionalitäten können auch in einem einzelnen Synchronisierungsbaustein im Steuerknoten zusammengefasst werden.

Die Datensätze in der Sequenztabelle sind vorzugsweise binär codiert. Die Kennung für die Aktionen einer dem Steuerknoten zugeordneten Fertigungssequenz ist dabei in den Datensätzen vorzugsweise fortlaufend durchnummeriert. Die Kennung für einen die Aktion ausführenden Teilnehmer ist vorzugsweise zweigeteilt. Sie kennzeichnet den Teilnehmer bzw. die Teilnehmer, die bei der Aktion angestoßen werden. Weiterhin kennzeichnet sie die Art und Weise, wie eine Aktion beenden werden soll, nämlich, ob es erforderlich ist, dass die Aktion ihr eigenes Ende signalisieren muss. Die Kennung der den Aktionen zugeordneten Parametersätze ist wiederum analog zu der Kennung der Aktionen selbst vorzugsweise fortlaufend durchnummeriert.

Die verschiedenen Parametersätze sind vorzugsweise als Tabelle zusammengefasst und mit einer Kennung versehen, die mit der entsprechenden Kennung in der Sequenztabelle übereinstimmt. Weiterhin weist der einer Aktion zugeordnete Parametersatz ein Produktstatus-Ausgangsdatum zum Vergleichen mit einem Produktzustand vor dem Ausführen der Aktion, ein Produktstatus-Enddatum zur Wiedergabe des Produktzustands, wenn die Aktion erfolgreich abgelaufen ist, und Aktionsparameter, die die Funktionalität der Aktion festlegen, auf. Optional ist noch ein Zeitüberschreitungsdatum für die Aktion vorgesehen, um ein Blockieren des Fertigungsprozesses bzw. anderer Teilnehmer durch einen Fehler bei der Ausführung der Aktion zu verhindern und um auf einfache Weise eine Kontrolle der Aktion durchführen zu können.

Der Teilnehmer 16 liest mit seinem Sequenzinterpreter 161 nach einem entsprechenden Triggersignal den in der Sequenztabelle gekennzeichneten Parametersatz zum Anstoßen der aufgerufenen Aktion aus einem Speicher im Steuerknoten 1, der z.B. der Speicher 14 im Steuerknoten mit der Gerätebeschreibung sein kann, aus. Der Teilnehmer erhält dabei als ein Signalisierungsdatum einen Zustandswert für ein im Rahmen der Aktion zu bearbeitendes Produkt. Diesen Produkt-Zustandswert vergleicht der Sequenzinterpreter 161 beim Abarbeiten der Sequenztabelle 153 mit dem Produktstatus-Ausgangsdatum in dem der Aktion zugeordneten Parametersatz, um eventuell einen Fehler festzustellen und diesen dann gegebenenfalls dem Erfassungsmodul 17 im Steuerknoten zu signalisieren. Das Signalisierungsdatum, das den Zustandswert für das in der Aktion zu bearbeitende Produkt angibt, kann zugleich auch das Triggersignal sein, dass den Sequenzinterpreter 161 des Teilnehmers 16 veranlasst, die Aktion anzustoßen.

Nach erfolgreichem Abschluss der Aktion gibt der Sequenzinterpreter 161 des Teilnehmers 16 dann ein Signalisierungsdatum aus, das den Produktzustand für das im Rahmen der Aktion bearbeitete Produkt angibt und gegebenenfalls als Triggersignal für einen weiteren Teilnehmer dient. Der Sequenzinterpreter 161 des Teilnehmers 16 übernimmt dabei als Signalisierungsdatum für den Produkt-Zustandswert das Produktstatus-Enddatum des der Aktion zugeordneten Parametersatzes. Die Signalisierungsdaten werden steuerknotenintern an weitere Teilnehmer im Rahmen von Datenabbildungsvorgängen übertragen, wobei die weiteren Teilnehmer direkt auf die Signalisierungsdaten zugreifen können. Die ausgegebenen Signalisierungsdaten lösen dann wieder als Triggersignal mit Hilfe der Sequenzinterpreter der anderen Teilnehmer die weitere Abarbeitung der Sequenztabelle aus. Alternativ kann, wenn in der Sequenztabelle als Kennung des angesprochenen Teilnehmers der Synchronisierungsbaustein angeführt ist, dieser ein Triggersignal für einen Teilnehmer in einem anderen Steuerknoten erzeugen, das dann über das Sende-Modul des Steuerknotens ausgegeben wird.

Durch die Aufteilung eines Fertigungsprozesses in Teilfertigungssequenzen, die als Sequenztabelle einzelnen Steuerknoten zugeordnet sind, besteht die Möglichkeit, durch Umprogrammieren der Sequenztabelle Änderungen im Fertigungsprozess auszuführen. Auch die einzelnen Parametersätze der Sequenztabelle können flexibel an Änderungen im Fertigungsprozess, ohne aufwendige Direktprogrammierung des Steuerknoten durchführen zu müssen, angepasst werden. Die Sequenztabelle bzw. die Parametersätze können dabei z.B. im Rahmen des Initialisierungsvorgangs vom Netzwerkkonfigurator 2 auf die einzelnen Steuerknoten übertragen werden. Auch besteht die Möglichkeit, die Sequenztabelle bzw. die Parametersätze während des Maschinenbetriebs mit Hilfe des Netzwerkkonfigurator 2 oder einer anderen Steuereinheit zu ändern.

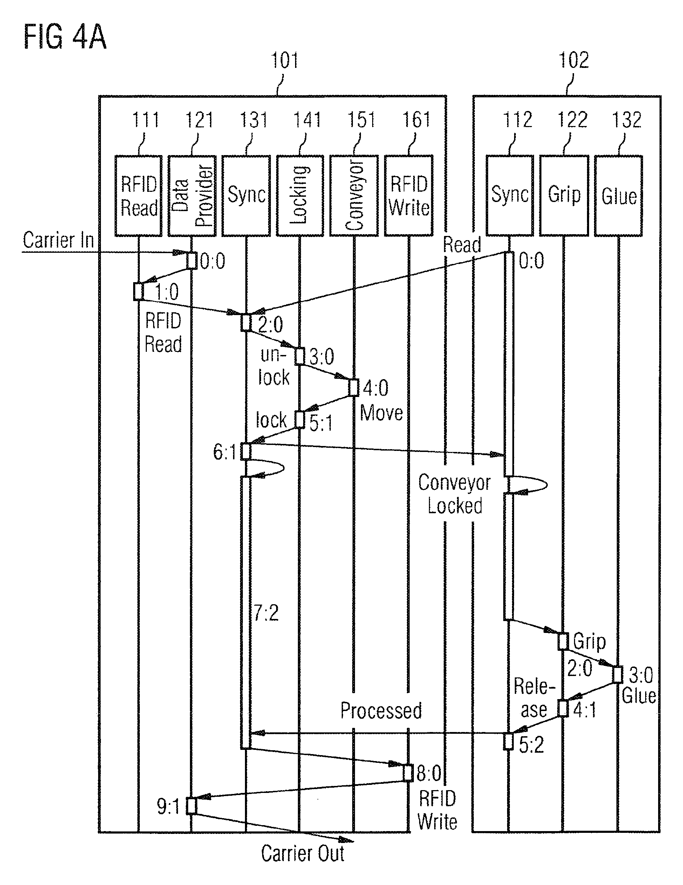

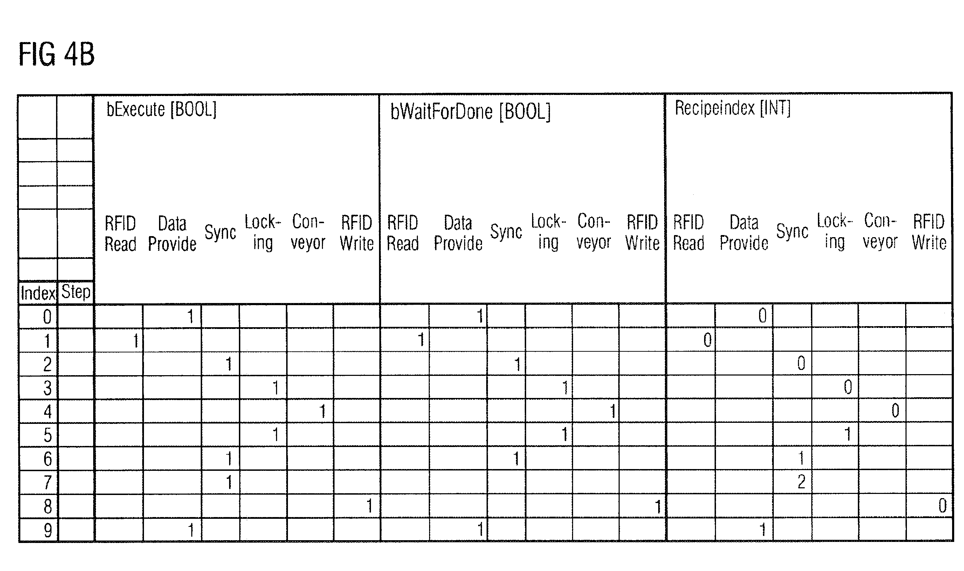

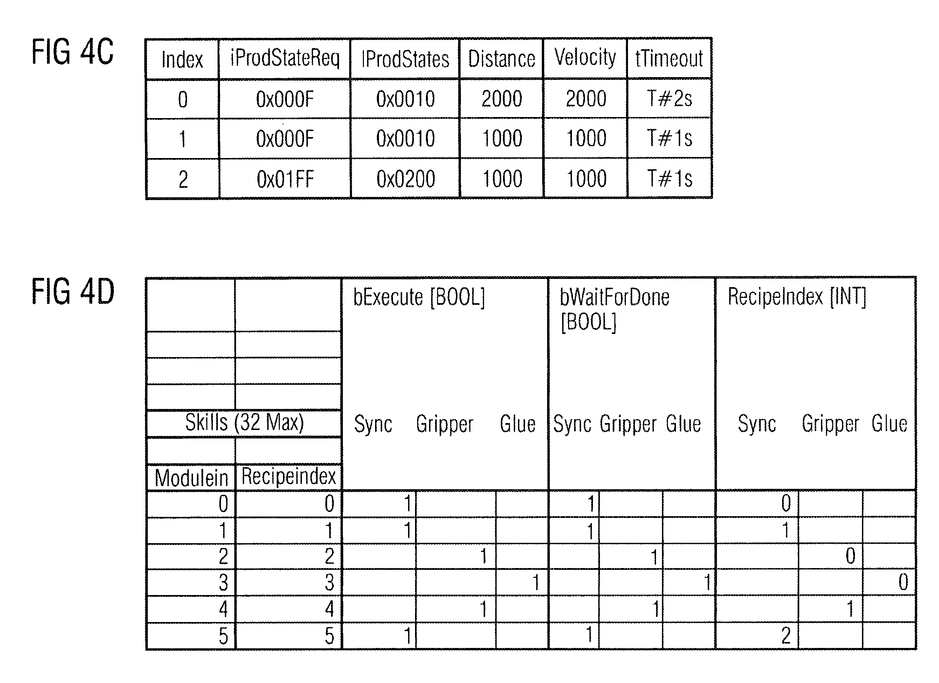

Figur 4 zeigt als Beispiel einen Fertigungsprozess mit zwei Steuerknoten. Der eine Steuerknoten stellt dabei ein Transportband 101, der andere Steuerknoten eine Klebeeinheit mit Greifer 102 dar. Der Steuerknoten Transportband 101 ist in sechs Teilnehmer mit eigenständigen Funktionalitäten unterteilt, nämlich, eine Identifierungseinheit 111, vorzugsweise ein sogenanntes RFID-Lesegerät, eine Datensammeleinheit 121, einen Synchronisierungsbaustein 131, eine Fixiereinheit 141, eine Transporteinheit 151 und eine Kennzeichnungseinheit 161, vorzugsweise einen RFID-Transponder. Die Klebeeinheit 102 weist als Teilnehmer mit einzeln ansprechbaren Funktionalitäten einen Synchronisierungsbaustein 112, einen Greifer 122 und einen Kleber 132 auf.

Fig. 4A zeigt die Gesamtsequenz eines Fertigungsprozesses, Fig. 4B die Sequenztabelle für den Steuerknoten Transportband 101, Fig. 4C die Parametersätze für den Steuerknoten Transportband 101 und Fig. 4D die Sequenztabelle für den Steuerknoten Klebeeinheit 102. Die Fertigungssequenz für den Steuerknoten Transportband 101 umfasst zehn Aktionen, die in zehn Datensätzen charakterisiert sind. Die Datensätze der Sequenztabelle des Steuerknotens Transportband sind, wie Fig. 4B zeigt, in drei Rubriken unterteilt, wobei die erste Rubrik die einzelne Aktion innerhalb der Fertigungssequenz kennzeichnet und fortlaufend von 0 bis 9 durchnummeriert ist. Die zweite Rubrik der Datensätze kennzeichnet den eine Aktion ausführenden Teilnehmer, wobei die Rubrik zweitteilig ausgelegt ist und den Teilnehmer angibt und zugleich kennzeichnet, ob es erforderlich ist, dass die Aktion ihr Ende signalisiert. Diese beiden Daten der zweiten Rubrik sind binär codiert, wobei der Zustand WAHR mit einer 1 gekennzeichnet ist. Als dritte Rubrik enthält der Datensatz eine Kennung eines der Aktion zugeordneten Parametersatzes. Die Parametersätze sind wieder fortlaufend nummeriert, hier von 0 bis 3.

Die drei Parametersätze der Sequenztabelle für den Steuerknoten Transportband 101 sind, wie Fig. 4C zeigt, in einer Rezepttabelle zusammengefasst und weisen eine Indizierung auf, die mit der Indizierung in der Sequenztabelle übereinstimmt. Der Parametersatz enthält dabei folgende Rubriken: Ein Produktstatus-Ausgangsdatum, ein Produktstatus-Enddatum, zwei Aktionsparameter, hier die Entfernung und Geschwindigkeit, sowie ein Zeitüberschreitungsdatum.

Die Sequenztabelle und die Parametersätze des Steuerknotens Klebeeinheit 102 sind analog aufgebaut. In Figur 4D ist dabei nur die Sequenztabelle gezeigt, die sechs Aktionen umfasst, die fortlaufend von 0 bis 5 durchnummeriert sind. Die den Aktionen zugeordneten Parametersätze sind in Fig. 4D nicht dargestellt.

Figur 4A zeigt die Abarbeitung der Sequenztabelle durch die Sequenzinterpreter der Teilnehmer im Steuerknoten Transportband 101 bzw. im Steuerknoten Klebeeinheit 102. Mit Pfeilen sind dabei die Datenpfade für die zwischen den Teilnehmern übertragenen Signalisierungsdaten gekennzeichnet. Der Sequenzinterpreter jedes Teilnehmers erwartet einen Zustandswert für das im Rahmen der dem Teilnehmer zugeordneten Aktion zu bearbeitende Produkt als Triggersignal. Die ausgeführte Aktion verändert diesen Zustandwert dann gemäß dem Produktstatus-Enddatum im zugeordneten Parametersatz. Der vom Sequenzinterpreter des Teilnehmers ausgegebene Produkt-Zustandswert nach Ende der Aktion löst dann bei dem gemäß der Sequenztabelle nachfolgend anzustoßenden Teilnehmers die gewünschte weitere Aktion aus und sorgt so für die erforderliche Synchronisierung der Aktionen.

In Fig. 4A ist der zeitliche Verlauf des Fertigungsprozess als Linien von oben nach unten für jeden Teilnehmer angegeben, wobei die von den einzelnen Teilnehmern auszuführenden Aktionen in Form von Kästchen auf der Linie eingezeichnet und mit dem Aktionskennung und der Parametersatzkennung versehen sind. Bei der in Fig. 4A gekennzeichneten Prozessfolge erfasst die Datensammeleinheit 121 im Transportband 101 als erste Aktion das Produkt und gibt den Produkt-Zustandswert an das RFID-Lesegerät 111 aus. Das RFID-Lesegerät 111 wiederum sendet nach Ausführung der zugeordneten Aktion den neuen Produkt-Zustandswert an den Synchronisierungsbaustein 131 im Transportband 101. Der Synchronisierungsbaustein 131 erhält zugleich ein weiteres Signalisierungsdatum vom Synchronisierungsbaustein 112 der Klebeeinheit 102. Der Synchronisierungsbaustein 131 im Transportband 101 verknüpft diese beiden Synchronisierungsdaten entsprechend dem in der Sequenztabelle gekennzeichneten Parametersatz und signalisiert den Produkt-Zustandswert dem Fixierelement 141 im Transportband 101, das nach Ausführung der zugeordneten Aktion der Transporteinheit 151 den Produkt-Zustandswert signalisiert, die wiederum nach Abarbeiten der gewünschten Aktion der Fixiereinheit 141 den Produkt-Zustandswert übermittelt. Die Fixiereinheit 141 übergibt nach Abschluss der zugeordneten Aktion den Produkt-Zustandswert dann dem Synchronisierungsbaustein 131 im Transportband 101.

Der Synchronisierungsbaustein 131 im Transportband 101 erzeugt daraufhin zwei Signalisierungsdaten, nämlich für sich selbst und für den Synchronisierungsbaustein 112 in der Klebeeinheit 102. Der Synchronisierungsbaustein 112 der Klebeeinheit 102 stößt dann mit dem Produkt-Zustandswert den Greifer 122 und der Greifer 122 nach Ausführung der zugeordneten Aktion den Kleber 132 an. Der Kleber 132 triggert dann nach Ausführung der gewünschten Aktion mit dem Produkt-Zustandswert den Greifer 122 und der Greifer 122 anschließend den Synchronisierungsbaustein 112 in der Klebeeinheit 102, die daraufhin ein Signalisierungsdatum für den Synchronisierungsbaustein 131 im Transportband 101 erzeugt. Die Synchronisierungseinheit 131 im Transportband 101 aktiviert den RFID-Transponder 151, der nach Ausführung der zugeordneten Aktion mit dem Produktzustandswert die Datensammeleinheit 121 anstößt, die anschließend den Fertigungsprozess mit einer Datenausgabe beendet.

Der Zeitüberschreitungsparameter in den Parametersätzen der Rezepttabelle sorgt beim Abarbeiten der Aktion dafür, dass der Teilnehmer eine Signalisierung ausführt, wenn ein bestimmte Zeitdauer für die Aktion überschritten ist, so dass die weiteren Teilnehmer, die auf diese Signalisierung warten, dann mit ihren Sequenzinterpretern die Sequenztabelle schon vor Abschluss der Aktion weiter abarbeiten können. Hierdurch lassen sich sog. Deadlocks beim Fertigungsprozess verhindern. Zugleich kann im Steuerknoten eine Fehlererfassung mit Hilfe des Erfassungsmoduls 17 erfolgen.

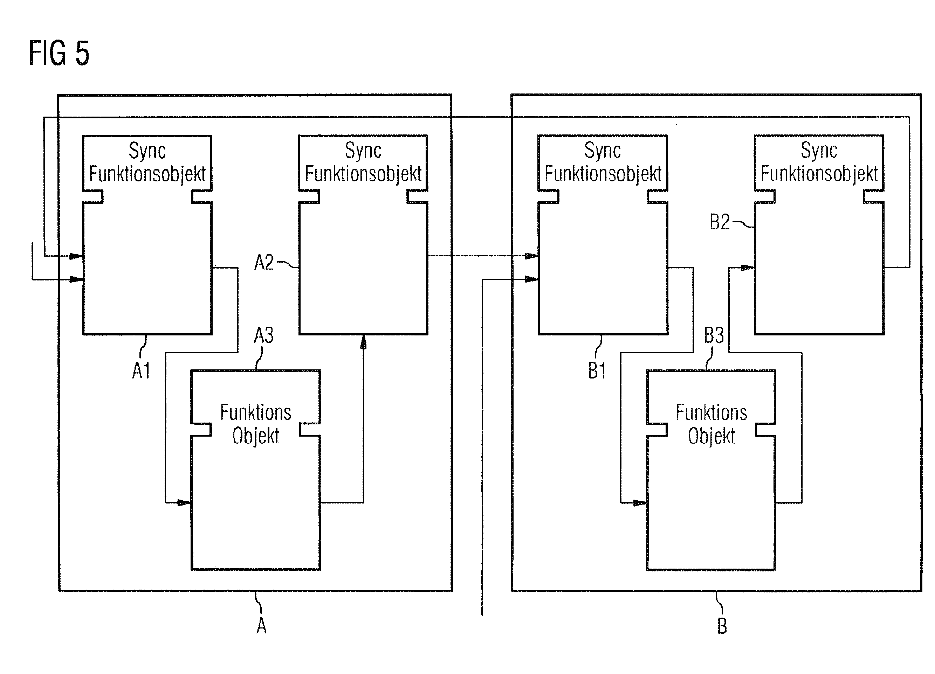

Fig. 5 zeigt im Detail die Synchronisierung von Aktionen zwischen Steuerknoten mit Hilfe von als Teilnehmer ausgebildeten Synchronisierungsbausteinen am Beispiel zweier Steuerknoten A, B. Jeder Steuerknoten A, B hat dabei einen Empfangssynchronisierungsbaustein A1, B1 zum Empfangen von Signalisierungsdaten weiterer Steuerknoten und ein Sendesynchronisierungsbaustein A2, B2 zum Ausgeben von Signalisierungsdaten an weitere Steuerknoten. Zusätzlich ist in den in Fig. 5 dargestellten Steuerknoten noch ein weiterer Funktionsteilnehmer A3, B3 zum Ausführen einer Steuerknotenfunktion dargestellt. Mit dem Synchronisierungsbaustein besteht die Möglichkeit, über Steuerknotengrenzen hinweg auf einfache Weise synchrone Fertigungsprozesse zu gewährleisten.

Die Pfeile in Fig. 5 zeigen die Signalisierungsdatenpfade an. Der Empfangssynchronisierungsbaustein A1 im Steuerknoten A hält dabei Signalisierungsdaten vom Sendesynchronisierungsbaustein B2 des Steuerknotens B und eines weiteren nicht gezeigten Steuerknotens. Auf der Grundlage dieser Signalisierungsdaten erzeugt der Empfangssynchronisierungsbaustein A1 im Steuerknoten A mit Hilfe einer logischen Verknüpfung ein Signalisierungsdatum für den Teilnehmer Funktionsobjekt A3 im Steuerknoten A, der dann auf der Grundlage einer Sequenztabelle die gewünschte Aktion anstößt. Nach Abschluss der Aktion signalisiert der Teilnehmer Funktionsobjekt A3 dann dem Sendesynchronisierungsbaustein A2 im Steuerknoten A, der auf der Grundlage dieses Signalisierungsdatums ein Signalisierungsdatum für den Empfangsignalisierungsbaustein B1 im Steuerknoten B erzeugt. Der Empfangssignalisierungsbaustein B1 im Steuerknoten B erhält zudem von einem weiteren Steuerknoten ein zusätzliches Signalisierungsdatum. Mit Hilfe einer logischen Verknüpfung erzeugt der Empfangssynchronisierungsbaustein B1 im Steuerknoten B dann ein Signalisierungsdatum für den Teilnehmer Funktionsobjekt B3 im Steuerknotenbaustein B, der auf der Grundlage einer Sequenztabelle eine gewünschte Aktion anstößt und nach Abschluss der Aktion ein Signalisierungsdatum an den Sendesynchronisierungsbaustein B2 des Steuerknotens B übergibt, der dann das Synchronisierungsdatum für den Empfangssynchronisierungsbaustein A1 des Steuerknotens A erzeugt.

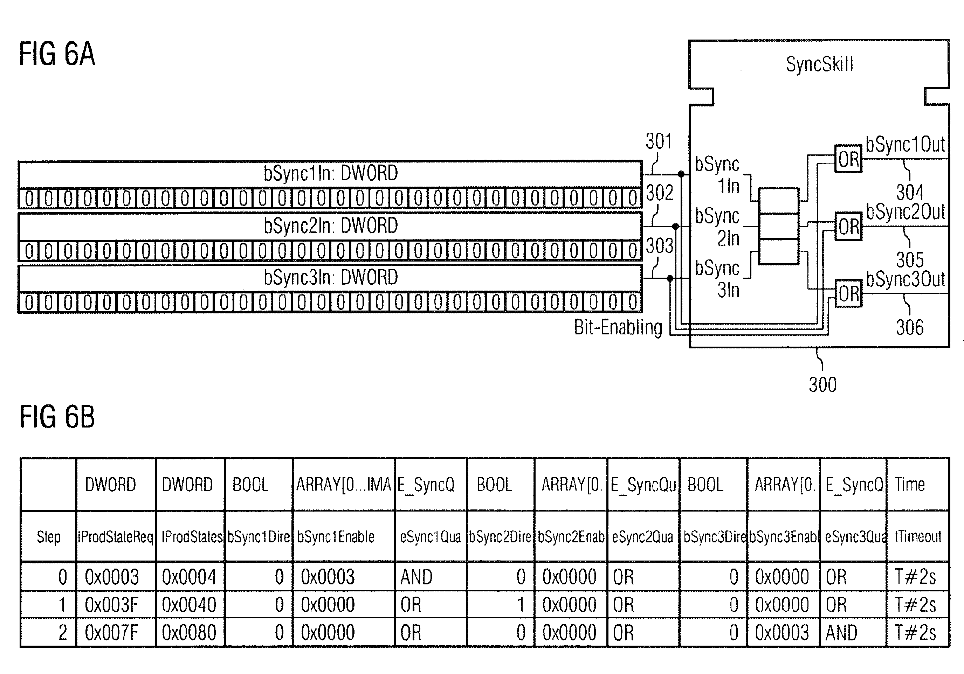

Fig. 6 zeigt im Detail einen möglichen Aufbau für einen Synchronisierungsbaustein 300, der sowohl als Empfangs- als auch als Sendesynchronisierungsbaustein in einem Steuerknoten arbeitet. In Fig. 6A ist dabei schematisch der Aufbau und in Fig. 6B sind Parametersätze für den Synchronisierungsvorgang gezeigt. Bei dem in Fig. 6A gezeigten Synchronisierungsbaustein 300 sind drei Signalisierungseingänge 301, 302, 303 und drei Signalisierungsausgänge 304, 305, 306 vorgesehen. Zur Empfangssynchronisierung führt der Synchronisierungsbaustein 300 für jeden der drei Signalisierungseingänge 301, 302, 303 eine logische Verknüpfung gemäß den in einer Sequenztabelle zugeordneten Parametersätzen aus.

In Fig. 6B sind drei mögliche Parametersätze für drei verschiedene Synchronisierungsoperationen gezeigt, wobei der Parametersatz 1 eine AND-, eine OR- und eine OR-Verknüpfung, der Parametersatz 2 eine OR-, eine OR- und eine OR-Verknüpfung und der Parametersatz 3 eine OR-, eine OR- und eine AND-Verknüpfung ausführt. In den Parametersätzen ist dabei analog den Parametersätzen der Funktionsteilnehmer weiter das Produktstatus-Ausgangsdatum und das Produktstatus-Enddatum angegeben.

Wenn der Synchronisierungsbaustein 300 als Sendesynchronisierungsbaustein für den Steuerknoten dient, wird anstatt von Verknüpfungsoperationen eine unbedingte Signalisierung auf den Signalisierungsausgängen 304, 305, 306 auf der Grundlage der vorgegebenen Parametersätze der Sequenztabelle ausgeführt. Die Doppelfunktion des Synchronisierungsbausteins 300 als Sendesynchronisierungsbaustein und Empfangssynchronisierungsbaustein ist in Fig. 6A mit Hilfe von OR-Verknüpfungen, die vor den Signalisierungsausgängen 304, 305, 306 angeordnet sind, steuerbar. Weitere mögliche logische Verknüpfungsoperationen sind neben AND und OR, wie sie gemäß den Parametersätzen in Fig. 6B ausgeführt werden, auch NAND, NOR oder XOR.

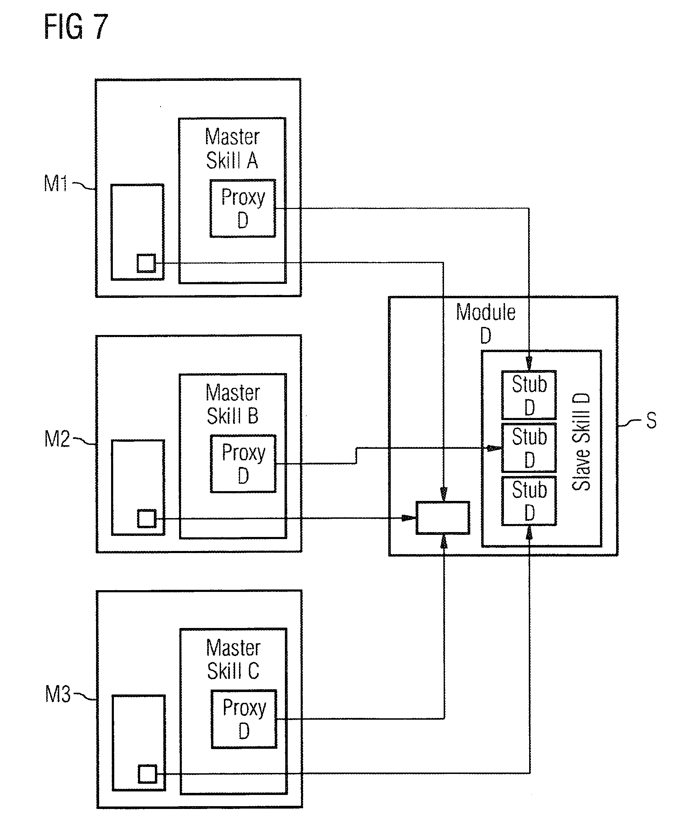

Eine weitere Flexibilisierung der dezentralen Steuerung kann zusätzlich durch eine enge deterministische Kopplung von Teilnehmern auch über Steuerknotengrenzen hinweg erfolgen. Fig. 7 zeigt einen Datenaustausch zwischen vier Steuerknoten M1, M2, M3, S gemäß einem Master-Slave-Teilnehmerkonzept. Beim Master-Slave-Teilnehmerkonzept ist ein Teilnehmer im Steuerknoten als Master-Teilnehmer und ein weiterer Teilnehmer, der im selben oder einem weiteren Steuerknoten vorgesehen sein kann, als Slave-Teilnehmer konfiguriert, wobei der Master-Teilnehmer den Slave-Teilnehmer als untergeordnetes Funktionsobjekt nutzt. Wie Fig. 7 zeigt, können dabei auch mehrere Master-Teilnehmer, hier die Master-Teilnehmer M1, M2, M3 auf den gleichen Slave-Teilnehmer S zugreifen.

Der Slave-Teilnehmer S kann zum Ausführen seiner Funktionalität im Rahmen von Aktionen der Master-Teilnehmer M1, M2, M3, wie in Fig. 7 gezeigt, auf die Parametersätze der Master-Teilnehmers M1, M2, M3 zugreifen. Der Master-Teilnehmer weist zum Datenaustausch ein Stellvertreterobjekt Proxy D und der Slave-Teilnehmer einen Anknüpfungspunkt Stub D auf, wobei das Stellvertreterobjekt Proxy D Eingangsvariablen in ein Datentelegramm umwandelt und an den Anknüpfungspunkt Stub D sendet und der Anknüpfungspunkt Stub D Ausgangsvariablen nach Ausführen der Slave-Funktion in ein Datentelegramm umwandelt und an das Stellvertreterobjekt Proxy D sendet. Der Datenaustausch zwischen Master-Slave-Teilnehmern in einem Steuerknoten erfolgt dabei in Form von Datenabbildungsvorgängen, über die Steuerknotengrenzen hinweg, wie in Fig. 6B gezeigt, mit Hilfe der Sende- und Empfangsmodule der Steuerknoten. Das Master-Slave-Konzept ermöglicht eine weitere Optimierung der Teilnehmerfunktionalitäten, da Funktionalitätshierarchien gebildet werden können. Aufbau und Abbau der Master-Slave-Kopplung kann dabei in der Initialisierungsphase z.B. durch den Netzwerkkonfigurator oder auch durch die Master-Teilnehmer selbst erfolgen.

## Patentansprüche

1. Steuerknoten umfassend eine Sequenztabelle (153) und Teilnehmer (16), wobei die Sequenztabelle (153) Datensätze mit jeweils einer Kennung für eine Aktion einer dem Steuerknoten zugeordneten Fertigungssequenz, einer Kennung für einen die Aktion ausführenden Teilnehmer und einer Kennung eines der Aktion zugeordneten Parametersatzes aufweist, wobei jeder Teilnehmer einen Sequenzinterpreter (161) aufweist, der ausgelegt ist, die Sequenztabelle zu lesen, zu interpretieren und die dem Teilnehmer zugeordneten Aktionen anzustoßen, wobei ein Teilnehmer (112, 131; 300) als Synchronisationsbaustein ausgebildet ist, der ausgelegt ist, Signalisierungsdaten gemäß einer in der Sequenztabelle (153) zugeordneten Aktion zu erzeugen, wobei der Sequenz-Interpreter (161) wenigstens eines weiteren Teilnehmers die Sequenztabelle (153) auf der Grundlage von Signalisierungsdaten des Synchronisationsbausteins abarbeitet,
**dadurch gekennzeichnet, dass**
der Synchronisationsbaustein (112, 131; 300) die Signalisierungsdaten für den weiteren Teilnehmer mit Hilfe einer logischen Verknüpfung von angelegten Signalisierungsdaten erzeugt, wobei die logische Verknüpfung durch die in der Sequenztabelle (153) zugeordnete Aktion vorgegeben ist.

2. Steuerknoten nach Anspruch 1, **dadurch gekennzeichnet, dass** der einer Aktion zugeordnete Parametersatz ein Produktstatus-Ausgangsdatum zum Vergleichen mit einem Produkt-Zustandwert vor dem Ausführen der Aktion,
ein Produktstatus-Enddatum zur Wiedergabe des Produkt-Zustandwertes, wenn die Aktion erfolgreich abgelaufen ist, und
Aktionsparameter, die die Funktionalität der Aktion festlegen, aufweist.

3. Steuerknoten nach Anspruch 2, **dadurch gekennzeichnet, dass** der einer Aktion zugeordnete Parametersatz weiter ein Zeitüberschreitungsdatum für die Aktion aufweist.

4. Steuerknoten nach einem der Ansprüche 1 bis 3, **dadurch gekennzeichnet, dass** jeder Teilnehmer (16) als ein erstes Signalisierungsdatum einen Zustandwert für ein im Rahmen der Aktion zu bearbeitendes Produkt erhält und als ein zweites Signalisierungsdatum nach erfolgreichen Abschluss der Aktion einen Zustandwert für ein im Rahmen der Aktion bearbeitetes Produkt ausgibt.

5. Steuerknoten nach einem der Ansprüche 1 bis 4, **gekennzeichnet durch** einen Speicher (14) für die der Fertigungssequenz zugeordneten Parametersätze, wobei ein Parametersatz jeweils beim Anstoßen der Aktion vom Teilnehmer abgeholt wird.

6. Steuerung zum Ausführen von Fertigungsprozessen umfassend über ein Datenkommunikationsnetzwerk miteinander verbundene Steuerknoten nach einem der Ansprüche 1 bis 5, wobei der Fertigungsprozess in von den jeweiligen Steuerknoten (1) auszuführende Fertigungssequenzen mit Aktionen unterteilt ist und jeder Steuerknoten als Teilnehmer einen Empfangssynchronisierungsbaustein (A1, B1) zum Empfangen von Signalisierungsdaten weiterer Steuerknoten und einen Sendesynchronisierungsbaustein (A2, B2) zum Ausgeben von Signalisierungsdaten an weitere Steuerknoten aufweist.

7. Steuerung nach Anspruch 6, **dadurch gekennzeichnet, dass** ein Synchronisierungsbaustein (300) mit Signalisierungsausgängen (304, 305, 306) sowohl als Empfangs- als auch als Sendesynchronisierungsbaustein arbeitet, wobei die Doppelfunktion mit Hilfe von OR-Verknüpfungen, die vor den Signalisierungsausgängen (304, 305, 306) angeordnet sind, steuerbar ist.

8. Steuerung nach Anspruch 6 oder 7, **dadurch gekennzeichnet, dass** die Datenübertragung zwischen den Steuerknoten (1) im Datenkommunikationsnetzwerk in Form von Datenpaketen erfolgt, wobei jeder Steuerknoten ein Sende-Modul (12), das ausgelegt ist, die zu verschickenden Daten in einem Ausgangsprozessabbild zu verwalten, das Ausgangsprozessabbild in ein Datenpaket umzusetzen und das Datenpaket zu einem vorgegebenen Zeitpunkt auf das Datenkommunikationsnetzwerk auszugeben, und ein Empfangs-Modul (13), das ausgelegt ist, sich für die Datenpakete eines oder mehrerer Sende-Module von weiteren Steuerknoten anzumelden und ein empfangenes Datenpaket in ein Eingangsprozessabbild umzusetzen, aufweist.

9. Steuerung nach einem der Ansprüche 6 bis 8, **dadurch gekennzeichnet, dass** das Sende-Modul (12) jedes Steuerknotens ausgelegt ist, das Datenpaket an einen oder mehrere weitere Steuerknoten direkt zu adressieren.

10. Steuerung nach einem der Ansprüche 6 bis 9, **dadurch gekennzeichnet, dass** das Sende-Modul (12) jedes Steuerknotens ausgelegt ist, Nicht-Echtzeitdaten azyklisch an einen oder an mehrere weitere Steuerknoten direkt zu versenden und Echtzeitdaten zyklisch an alle über das Datenkommunikationsnetzwerk angeschlossenen Steuerknoten zu versenden.

11. Steuerung nach einem der Ansprüche 6 bis 10, **dadurch gekennzeichnet, dass** eine Datenübertragung zwischen den Teilnehmern innerhalb der Steuerknoten in Form eines Datenabbildungsvorganges ausgeführt wird.

12. Steuerung nach einem der Ansprüche 6 bis 11, **dadurch gekennzeichnet, dass** ein Teilnehmer in einem Steuerknoten als Master-Teilnehmer und ein weiterer Teilnehmer in demselben oder einem weiteren Steuerknoten als Slave-Teilnehmer konfiguriert werden kann, wobei in der Master-Slave-Kopplung der Master-Teilnehmer den Slave-Teilnehmer als Funktionsobjekt nutzt.

13. Steuerung nach Anspruch 12, **dadurch gekennzeichnet, dass** der Master-Teilnehmer ein Stellvertreterobjekt und der Slave-Teilnehmer einen Anknüpfungspunkt aufweist, wobei das Stellvertreterobjekt Eingangsvariablen für ein Funktionsobjekt in ein Datentelegramm umwandelt und an den Anknüpfungspunkt sendet und der Anknüpfungspunkt Ausgangsvariablen des Funktionsobjektes in ein Datentelegramm umwandelt und an das Stellvertreterobjekt sendet.

14. Steuerung nach Anspruch 12 oder 13, **dadurch gekennzeichnet, dass** ein Aufbau und Abbau der Master-Slave-Kopplung durch einen Netzwerkkonfigurator oder durch den Master-Teilnehmer erfolgt.

## Claims

1. A control node having a sequence table (153) and a subscriber (16), the sequence table comprising data records with a respective identification for an action of a manufacturing sequence associated to the control node, an identification for a subscriber executing the action and an identification of a parameter set associated with the action, each subscriber comprising a sequence interpreter (161) which is designed to read and to interpret the sequence table, and to initiate the actions associated with the subscriber, wherein a subscriber (112, 131; 300) is configured as a synchronization component, the synchronization component being configured to generate signalling date according to an action associated in the sequence table (153), the sequence interpreter (161) of at least one further subscriber processing the sequence table (153) on the basis of signalling data of the synchronization component,
**characterized in that**
the synchronization component (112, 131; 300) generating the signalling data for the further subscriber by means of a logic operation of applied signalling data, the logic operation being provided by the action associated in the sequence table (153).

2. The control node according to claim 1, **characterized in that** the parameter set associated with an action comprises a product state output date for a comparison with the actual product state value prior to executing the action,
a product state final date for rendering the actual product state value upon successfully finalizing the action, and action parameters determining the functionality of the action.

3. The control node according to claim 2, **characterized in that** the parameter set associated with an action further comprises a timeout date for the action.

4. The control node according to any one of claims 1 to 3, **characterized in that** each subscriber (16) receives as a first signalling date an actual product state value for a product to be processed in the context of the action and as a second signalling date issues an actual product state value for a product processed in the context of the action upon successful termination of the action.

5. The control node according to any one of claims 1 to 4, comprising a memory (14) for the parameter sets associated with the manufacturing sequence, whereby the subscriber retrieves a parameter set upon initializing the action, respectively.

6. A control system for executing manufacturing processes comprising control nodes according to any one of claims 1 to 9 connected to each other via a data communication network, wherein the manufacturing process is divided up into manufacturing sequences to be carried out by the respective control nodes (1), the manufacturing sequences comprising actions, and each control node comprises as a subscriber a receiving synchronization component (A1, B1) for receiving signalling data of further control nodes as well as a transmission synchronization component (A2, B2) for issuing signalling data to further control nodes.

7. The control system of claim 6, **characterized in that** a synchronization component (300) operates with signalling outputs (304, 305, 306) as a receiving as well as a transmitting synchronization component, wherein the double function is controllable by means of disjunctions arranged in front of the signalling outputs (304, 305, 306).

8. The control system according to any one of claims 6 or 7, **characterized in that** the data transmission between the control nodes (1) in the data communication network takes place in the form of data packets, each control node comprising a transmitter module (12) configured to manage the data to be transmitted in an output process image, to convert the output process image into a data packet and to output the data packet to the data communication network at a predetermined point in time, as well as comprising a receiver module (13) configured to log on for the data packets of one or more transmitter modules of further control nodes and to convert a received data packet into an input process image.

9. The control system according to claims 6 or 8, **characterized in that** the transmitter module (12) of each control node is configured to directly address the data packet to one or more further control nodes.

10. The control system according to any one of claims 6 to 9, **characterized in that** the transmitter module (12) of each control node is configured to directly transmit non-real time data to one or more further control nodes in an acyclic manner and to transmit real-time data to all control nodes connected via the data communication network in a cyclic manner.

11. The control system according to any one of claims 6 to 10, **characterized in that** a data transmission between the subscribers is carried out within the control node in the form of a data imaging process.

12. The control system according to any one of claims 6 to 11, **characterized in that** a subscriber in a control node may be configured as a master subscriber and a further subscriber in the same or in a further control node may be configured as a slave subscriber, the master subscriber using the slave subscriber as a functional object in the master-slave connection.

13. The control system according to claim 12, **characterized in that** the master subscriber comprises a proxy and the slave subscriber comprising a stub, whereby the proxy converts input variables for a functional object into a data telegram and transmits it to the stub, and the stub converts output variables of the functional object into a data telegram and transmits it to the proxy.

14. The control system according to claim 12 or 13, **characterized in that** the master-slave connection is configured and dismantled by means of a network configurator.

## Revendications

1. Noeud de commande comprenant une table de séquences (153) et des dispositifs clients (16), dans lequel la table de séquences (153) comprend des enregistrements ayant chacun un identifiant pour une action d'une séquence de fabrication associée à un noeud de commande, un identifiant pour un dispositif client exécutant l'action et un identifiant d'un jeu de paramètres associé à l'action, dans lequel chaque dispositif client comprend un interpréteur de séquence (161) qui est conçu pour lire la table de séquences, l'interpréter et déclencher les actions associées aux dispositifs clients, dans lequel un dispositif client (112, 131 ; 300) est réalisé sous la forme d'un composant de synchronisation qui est conçu pour générer des données de signalisation selon une action associée dans la table (153), dans lequel l'interpréteur de séquence (161) d'au moins un autre dispositif client exécute la table de séquences (153) sur la base de données de signalisation du composant de synchronisation,
**caractérisé en ce que**
le composant de synchronisation (112, 131 ; 300) génère les données de signalisation pour les autres dispositifs clients en utilisant une combinaison logique de données de signalisation appliquées, dans lequel la combinaison logique est déterminée par l'action associée dans la table de séquences (153).

2. Noeud de commande selon la revendication 1, **caractérisé en ce que** le jeu de paramètres associé à une action comprend une donnée de sortie de statut de produit destinée à être comparée à une valeur d'état de produit avant l'exécution de l'action, une donnée de fin de statut de produit pour la reproduction de la valeur d'état du produit lorsque l'action est exécutée avec succès, et
des paramètres d'action qui définissent la fonctionnalité de l'action.

3. Noeud de commande selon la revendication 2, **caractérisé en ce que** le jeu de paramètres associé à l'action comprend en outre une donnée de dépassement de temps pour l'action.

4. Noeud de commande selon l'une des revendications 1 à 3, **caractérisé en ce que** chaque dispositif client (16) obtient une valeur d'état en tant que première donnée de signalisation pour un produit devant être traité dans le cadre de l'action et délivre une valeur d'état en tant que seconde donnée de signalisation après réussite de l'action pour un produit traité dans le cadre de l'action.

5. Noeud de commande selon l'une des revendications 1 à 4, **caractérisé par** une mémoire (14) destinée aux jeux de paramètres associés à la séquence de fabrication, dans lequel un jeu de paramètres respectif est collecté lors du déclenchement de l'action par des dispositifs clients.

6. Commande destinée à exécuter des processus de production comprenant des noeuds de commande selon l'une des revendications 1 à 5 interconnectés par l'intermédiaire d'un réseau de communication de données, dans lequel le processus de fabrication est subdivisé en des séquences de fabrication devant être exécutées par les noeuds de commande respectifs (1) conformément à des actions et chaque noeud de commande comprend en tant que dispositif client un composant de synchronisation de réception (A1, B1) destiné à recevoir des données de signalisation d'autres noeuds de commande et un composant de synchronisation d'émission (A2, B2) destiné à délivrer des données de signalisation à d'autres noeuds de commande.

7. Commande selon la revendication 6, dans laquelle un composant de synchronisation (300) ayant des sorties de signalisation (304, 305, 306) fonctionne à la fois en tant que composant de synchronisation de réception et d'émission, la double fonction pouvant être commandée au moyen de combinaisons OU qui sont disposées en amont des sorties de signalisation (304, 305, 306).

8. Commande selon la revendication 6 ou 7, **caractérisée en ce que** la transmission de données entre les noeuds de commande (1) dans le réseau de communication de données s'effectue sous la forme de paquets de données, dans laquelle chaque noeud de commande comprend un module d'émission (12) qui est conçu pour gérer les données à envoyer dans une image du processus de sortie, pour convertir l'image du processus de sortie en un paquet de données et pour délivrer le paquet de données à un instant prédéterminé sur le réseau de communication de données, et un module de réception (13) qui est conçu pour s'enregistrer pour les paquets de données d'un ou plusieurs modules d'émission d'autres noeuds de commande et pour convertir un paquet de données reçu en une image du processus d'entrée.

9. Commande selon l'une des revendications 6 à 8, **caractérisée en ce que** le module d'émission (12) de chaque noeud de commande est conçu pour adresser directement le paquet de données à un ou plusieurs autres noeuds de commande.

10. Commande selon l'une des revendications 6 à 9, **caractérisée en ce que** le module d'émission (12) de chaque noeud de commande est conçu pour envoyer directement et de manière acyclique les données en temps différé à un ou plusieurs autres noeuds de commande et pour envoyer de manière cyclique les données en temps réel à tous les noeuds de commande connectés par l'intermédiaire du réseau de communication de données.

11. Commande selon l'une des revendications 6 à 10, **caractérisée en ce qu'**une transmission de données est effectuée entre les dispositifs clients à l'intérieur des noeuds de commande sous la forme d'un processus de mise en correspondance des données.

12. Commande selon l'une des revendications 6 à 11, **caractérisée en ce qu'**un dispositif client peut être configuré dans un noeud de commande en tant que dispositif client maître **en ce qu'**un autre dispositif client, dans le même ou dans un autre noeud de commande, peut être configuré en tant que dispositif client esclave, dans laquelle, dans le couplage maître-esclave, le dispositif client maître utilise le dispositif client esclave en tant qu'objet fonction.

13. Commande selon la revendication 12, **caractérisée en ce que** le dispositif client maître comprend un objet mandataire et **en ce que** le dispositif client esclave comprend un point de référence, dans laquelle l'objet mandataire convertit des variables d'entrée de l'objet fonction en un message de données et l'envoie au point de référence, et le point de référence convertit des variables de sortie de l'objet fonction en un message de données et l'envoie à l'objet mandataire.

14. Commande selon la revendication 12 ou 13, **caractérisée en ce qu'**une construction et une déconstruction du couplage maître-esclave s'effectue au moyen d'un configurateur de réseau ou par l'intermédiaire du dispositif client maître.
